(19) Europäisches Patentamt
European Patent Office
Office européen des brevets

(11) **EP 3 792 304 A1**

(12) **EUROPEAN PATENT APPLICATION**

(43) Date of publication:
**17.03.2021 Bulletin 2021/11**

(51) Int Cl.:
***C08K 5/01*** *(2006.01)*

(21) Application number: **19196308.1**

(22) Date of filing: **10.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solvay SA**
**1120 Brussels (BE)**

(72) Inventors:
• **TAUBAN, Mathieu**
**690003 Lyon (FR)**
• **FERNANDEZ, Julien**
**690007 Lyon (FR)**

(74) Representative: **Valentino, Cédric**
**Rhodia Operations**
**IAM**
**85 Avenue des Frères Perret**
**69190 Saint-Fons (FR)**

(54) **COMPOSITIONS AND FILMS COMPRISING A VINYLIDENE FLUORIDE (CO)POLYMER AND AN AROMATIC COMPOUND, AND THEIR PREPARATION AND USES**

(57) The invention concerns a composition comprising a vinylidene fluoride (co)polymer and an aromatic compound X composed of 2, 3, 4 or 5 benzene rings, which is unsubstituted or substituted in particular by one or several substituents chosen among fluorine, chlorine, iodine and bromine atoms and methyl, methoxy, $-CHF_2$, $-CH_2F$, $-CF_3$, $-CN$, $-NO_2$, $-NH_2$, $-(CH_2)_n-CH_3$, $-(CF_2)_n-CH_3$, $-(CF_2CH_2)_n-CH_3$, and trifluoromethylphenyl groups, n being equal to 1, 2, 3 or 4. A film composed of this composition or comprising this composition, a method for its manufacture and electrical or electronic devices comprising such a film are other aspects of this invention.

EP 3 792 304 A1

**Description**

**Field**

The present invention relates to the technical field of materials useful for the manufacture of electrical and electronic devices. More precisely, the invention provides a composition containing a vinylidene fluoride (co)polymer and a specific aromatic compound, a film made with such a composition, a method for the manufacture of such a film and the electrical and electronic devices comprising such a film.

**Background**

The industry of electrical and electronic devices researches polymers with high performances and has led to the development of polymeric compositions with controlled and competitive electrical properties, for uses in the manufacture of devices, such as capacitors, sensors and actuators.

One of the main objectives in this field is to develop materials with high dielectric permittivity and low dielectric losses. Films of vinylidene fluoride (VDF) (co)polymers have been used extensively in the manufacture of electrical and electronic devices due to their ease of processing, chemical inertness and attractive dielectric properties. For their uses in capacitors, sensors and actuators, for instance, dielectric losses of films of VDF (co)polymers, which are proportional to the electric consumption and energy dissipation, should be as low as possible.

A known technique for decreasing dielectric losses is the biaxial orientation of the films in the device, which reduces the dielectric losses and increases the dielectric strength (J. M. Carr. et al. J. Polym. Sci., Part B: Polym. Phys. 2013, 51, 882-896). However, the obtaining of a biaxial orientation is a complex step and requires costly equipment for an industrial implementation.

Meng et al. (J Appl Polym Sci, 2010, 116(5), 2674-2684) describe a series of poly(methyl methacrylate) (PMMA) and poly(vinylidene fluoride) (PVDF) blends. A 3 fold drop of the dielectric losses at frequencies higher than 10kHz is obtained with the addition of 25 wt. % of PMMA in PVDF. However, the dielectric losses are increased at frequencies lower than 10kHz. As a result, a solution for decreasing the dielectric losses of PVDF based materials at low operating frequencies is still to be found.

Other solutions propose to add particular conductive nano-objects in order to increase the performances in certain application at the cost of increasing the dielectric losses. For instance:

- A.Bruna da Silva et al. in Polymer, 2014, vol. 55, p. 226-234 describe composites of copper nanowires and polyvinylidene fluoride (PVDF) with high dielectric permittivity. The composite is prepared by mixing at room temperature a solution of PVDF in DMF with a dispersion of copper nanowires in DMF. The dielectric loss of the composite significantly increases with the cooper nanowires content and the dissipation factor tan $\delta$ is rather high. Moreover, dielectric permittivity values are very limited in some domains of frequency sweep;
- WO 2019/073012 proposes a composition comprising at least one fluorinated polymer and silver nanowires coated with at least one metal oxide, for increasing the dielectric constant, with limited growth of dielectric losses. In certain embodiments, the fluorinated polymer is chosen among vinylidene fluoride homopolymers or copolymers which provide advantageously high chemical resistance. The dielectric losses of the composite also increase with the coated silver nanowire content.

Nevertheless, there is still a need for new compositions combining high thermal and chemical stability, high processability and high dielectric permittivity and low dielectric losses.

In this context, the invention provides new compositions of a VDF (co)polymer having lower dielectric losses at subhertz operating frequencies, in particular without alteration of the dielectric constant.

**Summary of the invention**

According to a first aspect, the invention concerns compositions comprising a vinylidene fluoride (co)polymer and an aromatic compound X, the aromatic compound X being an unsubstituted or substituted polycyclic aromatic compound which is composed of 2, 3, 4 or 5 fused benzene rings. When the aromatic compound X is substituted, it can be substituted by one or several substituents, which can be identical or different. Such substituent(s) is (are), in particular, chosen among fluorine, chlorine, iodine and bromine atoms and methyl, methoxy, - $CHF_2$, - $CH_2F$, - $CF_3$, -CN, - $NO_2$, - $NH_2$, - $(CH_2)_n$-$CH_3$, - $(CF_2)_n$-$CH_3$, - $(CF_2CH_2)_n$-$CH_3$ and trifluoromethylphenyl groups, n being equal to 1, 2, 3 or 4.

The invention allows decreasing the dielectric losses of a vinylidene fluoride (VDF) (co)polymer, by the addition of the specified aromatic compound X.

The invention also provides films composed of the composition according to the invention and substrates coated with an insulating coating consisting of the film of the invention. The present invention also relates to a film comprising at least a composition according to the invention; as well as any substrates coated with an insulating coating comprising at least the film of the invention.

The present invention also concerns a method for the manufacture of the film according to the invention, said method comprising the following steps:

i) providing a substrate,

(ii) providing a composition according to the invention, in a liquid form **CL,**

(iii) applying the composition in a liquid form **CL** provided in step (ii) onto at least one surface of the substrate provided in step (i), thereby providing a coating composition layer, and

(iv) drying the coating composition layer provided in step (iii) thereby providing the film.

The invention also provides electrical or electronic devices comprising the film according to the invention. In particular, such devices are selected from the group consisting of capacitors, such as high voltage capacitors and pulse power capacitors, sensors and actuators.

According to another aspect, the invention relates to the use, in a composition or film comprising a vinylidene fluoride (co)polymer, of an aromatic compound X which is composed of 2, 3, 4 or 5 fused benzene rings, unsubstituted, or substituted, in particular, by one or several substituents chosen among fluorine, chlorine, iodine and bromine atoms and methyl, methoxy, $-CHF_2$, $-CH_2F$, $-CF_3$, $-CN$, $-NO_2$, $-NH_2$, $-(CH_2)_n-CH_3$, $- (CF_2)_n-CH_3$, $-(CF_2CH_2)_n-CH_3$, and trifluoromethylphenyl groups, n being equal to 1, 2, 3 or 4, to reduce the dielectric losses in said composition or film.

The compositions, films, methods, devices, substrates and uses in accordance with the invention preferably exhibit one or more of the following features, or any combination of these features, or even all of the features below when they are not mutually exclusive:

- the vinylidene fluoride (co)polymer is a copolymer of vinylidene fluoride and at least one other fluoromonomer ; advantageously, the vinylidene fluoride (co)polymer is a copolymer of vinylidene fluoride and hexafluoropropylene ; according to particular embodiments, this copolymer is free of any other repeat unit;
- the composition comprises at least 49.5 wt. % (% by weight), in particular least 99.5 wt. %, preferably from 99.60 wt. % to 99.99 wt. %, and more preferentially from 99.75 wt. % to 99.88 wt. % of the vinylidene fluoride (co)polymer, based on the total weight of the composition ;
- the composition comprises at most 0.5 wt. %, preferably from 0.01 wt. % to 0.40 wt. %, and more preferentially from 0.12 wt. % to 0.25 wt. % of the aromatic compound X, based on the total weight of the composition ;
- the aromatic compound X is composed of 2, 3, 4 or 5, optionally partially fluorinated or perfluorinated, fused benzene rings ;
- the aromatic compound X is chosen in the group consisting of: pyrene, anthracene, naphthalene, phenanthrene, chrysene, picene, perfluoronaphtalene, perfluoroanthracene, perfluorophenanthrene, 1-fluoronaphtalene and octafluoronaphtalene ;
- the aromatic compound X is anthracene ; in that case, the composition advantageously comprises a content of anthracene higher than 0 wt. % and lower than 0.3 wt. %, preferably from 0.02 wt. % to 0.2 wt. %, based on the total weight of the composition ;
- the aromatic compound X is pyrene ; in that case, the composition advantageously comprises a content of pyrene higher than 0 wt. % and lower than 0.5 wt. %, preferably from from 0.02 wt. % to 0.3 wt. %, based on the total weight of the composition ;
- the composition is free of any component other than the vinylidene fluoride (co)polymer and the aromatic compound X.

**Brief description of the Figures**

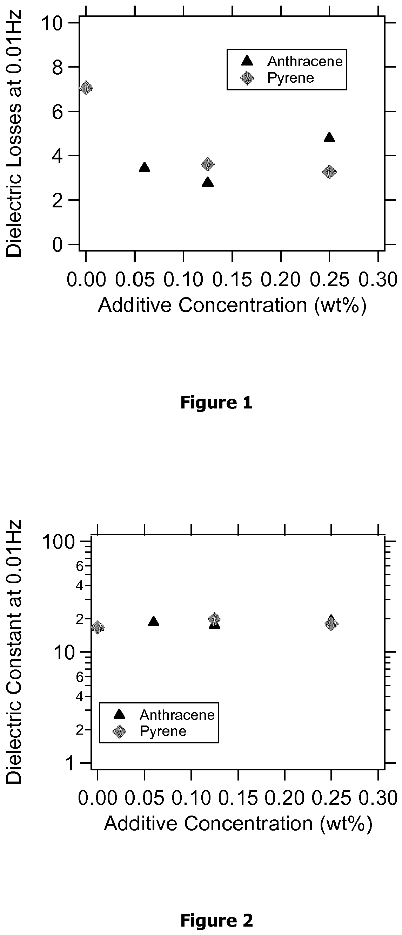

**Figures 1** and **2** show respectively the evolution of the dielectric constant and the dielectric loss of different films of the invention, taken at 10 mHz, as a function of the aromatic compound X concentration. Two series of compositions were studied: one series using pyrene as aromatic compound X (filled squares) and another series using anthracene as aromatic compound X (filled triangle), compared to the values obtained without aromatic compound X.

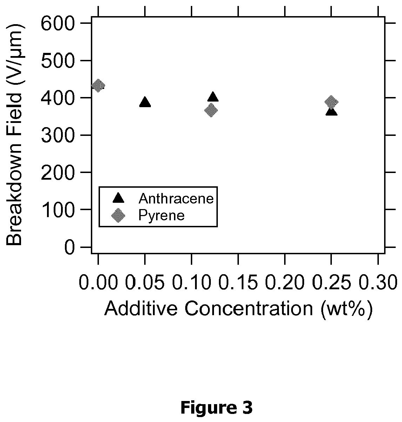

**Figure 3** shows the evolution of the breakdown voltage (more precisely the field at which 63.2% of the population of samples in the film have broken) of different films of the invention, as a function of the aromatic compound X concentration. Two series of compositions are studied: one series using pyrene as aromatic compound X (filled squares) and another series using anthracene as aromatic compound X (filled triangle), compared to the values obtained without aromatic compound X.

**Detailed description**

**Definitions**

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of".

As used in this specification, the singular forms "a", "an" and "the" include plural aspects unless the context clearly dictates otherwise. Thus, for example, reference to "an aromatic compound X" includes a single aromatic compound X, as well as two or more aromatic compounds X ; reference to "a VDF (co)polymer" includes a single VDF (co)polymer, as well as two or more VDF (co)polymers ; reference to "the disclosure" includes single or multiple aspects taught by the present disclosure. Aspects taught herein are encompassed by the term "invention".

So, reference to "an aromatic compound X" or "a VDF (co)polymer" includes single entities and combinations of two or more of such entities. Nevertheless, according to preferred embodiments, these terms designate a single entity.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

As used herein, "alkyl" groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups.

**Aromatic compound X**

According to the invention, an aromatic compound X corresponding to an unsubstituted or a substituted polycyclic aromatic compound composed of 2, 3, 4 or 5 fused benzene rings, is introduced within a (co)polymeric matrix comprising a VDF (co)polymer, for forming a composition. The aromatic compound X and the VDF (co)polymer are two distinct components of the composition and are not linked to each other by a covalent bond.

The term "aromatic compound X" is intended to mean an organic compound comprising at least one unsaturated cyclic group having delocalized pi electrons. The unsaturated cyclic group is composed of 2, 3, 4 or 5 benzene rings, which are fused. This unsaturated cyclic group is unsubstituted or optionally substituted. In particular, when one or more substituents is(are) present, it(they) can be chosen among fluorine chlorine, iodine and bromine atoms and methyl, methoxy, $-CHF_2$, $-CH_2F$, $-CF_3$, $-CN$, $-NO_2$, $-NH_2$, $-(CH_2)_n-CH_3$, $-(CF_2)_n-CH_3$, $-(CF_2CH_2)_n-CH_3$ and trifluoromethylphenyl groups, n being equal to 1, 2, 3 or 4. The above mentioned aromatic compound X may be, for instance, partially fluorinated or perfluorinated.

According to the invention, the aromatic compounds X is, for instance, chosen in the group consisting of: pyrene, anthracene, naphthalene, phenanthrene, chrysene, picene, perfluoronaphtalene, perfluoroanthracene, perfluorophenanthrene, 1-fluoronaphtalene, octafluoronaphtalene and 1,2,3,4,5,6,7,8-octafluoro-9,10-bis[4-(trifluoromethy)phenyl]anthracene.

According to a preferred embodiment, the aromatic compound X is pyrene.

According to another preferred embodiment, the aromatic compound X is anthracene.

According to the invention, the aromatic compounds X has, in particular, an energy gap Eg in the range 3.0 to 6.0 eV, preferentially in the range 3.2 to 4.2 eV. In particular, anthracene has an Eg of 3.5 eV, pyrene of 3.8 eV, naphthalene and phenanthrene of 4.7 eV, chrysene and pycene of 4.2 eV.

Eg corresponds to the energy difference between the highest occupied molecular orbital HOMO and the lowest unoccupied molecular orbital LUMO. So, the energy gap Eg = ELUMO - EHOMO. The term "HOMO" refers to the highest occupied molecular orbital. The term "LUMO" refers to the lowest unoccupied molecular orbital. The HOMO and LUMO energy levels are measured relative to vacuum level and in eV. By convention, the vacuum energy level is set as zero and the LUMO and HOMO energies are negative values. The band gap energy gap Eg is reported as a positive number in eV.

According to the invention, the energy gap Eg can be calculated using the density functional theory methods within, for instance, the Gaussian suite of programs (Gaussian 16, Revision C.01, Gaussian, Inc., Wallingford CT, 2016). The 6-31G* basis sets is used to obtain optimized structures, vibrational frequencies and HOMO/LUMO Energy values (ELUMO and EHOMO). The Eg is then computed as Eg = ELUMO - EHOMO. A detailed description of this approach is described for aromatic compounds in "Computed electronic structure of polynuclear aromatic hydrocarbon agglomerates." Proceedings of the Combustion Institute 36.1 (2017): 957-964.

Advantageously, in the composition of the invention, the organic aromatic compound X is not covalently bounded to an inorganic particle, in particular to an inorganic nanoparticle.

Composition of the invention may comprise one, two or several aromatic compounds X.

**Vinylidene fluoride (VDF) (co)polymers**

The compositions of the invention comprise a vinylidene fluoride (VDF) (co)polymer, referred also as polymer **F** or VDF (co)polymer. The term VDF (co)polymer means a polymer based on vinylidene fluoride. The VDF (co)polymer, referred as polymer **F,** may be a homopolymer, i.e. a polyvinylidenefluoride (PVDF) or a copolymer of vinylidene fluoride with at least another recurring monomeric unit.

In the definition of the polymer **F,** "recurring unit", "repeat unit" and "monomeric unit" are used indifferently. When it is said that a copolymer comprises recurring units derived from vinylidene fluoride (VDF) and recurring units derived from at least another monomer or that a copolymer is a copolymer of vinylidene fluoride and at least another monomer, that means the polymer is obtained by copolymerisation of the corresponding monomers.

By way of example, in a copolymer of vinylidene fluoride and at least another recurring monomeric unit, the other recurring unit, may correspond to another fluoromonomer, in particular chosen among hexafluoropropylene (HFP), trifluoroethylene (TrFE), vinyl fluoride, tetrafluoroethylene, fluoroalkyl vinyl ether, chlorotrifluoroethylene (CTFE), pentafluoropropene, hexafluoroisobutylene, 3,3,3-trifluoropropene, perfluoromethylether. Other suitable recurring monomeric unit are hydrophilic (meth)acrylic monomers, such as hydroxyethylacrylate HEA, 2-hydroxypropyl acrylate HPA, acrylic acid HA. The copolymer of vinylidene fluoride may comprise one or several, for instance one or two, recurring monomeric units chosen in the above mentioned list, in addition to the vinylidene fluoride recurring unit. Particularly suitable examples are VDF-HFP copolymers, VDF-TrFE copolymers and VDF-TrFE-CTFE terpolymers.

These kinds of VDF copolymers are commercially available, for instance under the references Solef® PVDF, in particular Solef® 21510, or Solvene® 200, Solvene® 250 and Solvene® 300 P(VDF-TrFE) copolymers, or Solvene® T P(VDF-TrFE-CTFE) sold by SOLVAY. Polymers suitable as polymer **F** are also described in the patent applications WO 2019/073012, WO 2008/129041 and WO 2009/147030, which are incorporated herein by reference.

The polymer **F** is advantageously a linear polymer comprising linear sequences of recurring units derived from vinylidene fluoride (VDF) and at least one other monomer, in particular hexafluoropropylene (HFP). The polymer **F** is thus typically distinguishable from graft polymers.

The polymer **F** is advantageously a random copolymer comprising linear sequences of randomly distributed recurring units derived from vinylidene fluoride (VDF) and at least another monomer, in particular hexafluoropropylene (HFP). The polymer **F** is thus typically distinguishable from block polymers.

The person skilled in the art will select the appropriate concentration of each recurring units in view of the required properties in the target field of use of the composition of the invention. However, whatever the used copolymer, it is preferred that the vinylidene fluoride (VDF) represents at least 75 mol. % (molar % that represents the number of moles of vinylidene fluoride units in %, with respect to the total number of moles of monomeric units in the copolymer), advantageously at least 80 mol. %, and preferably at least 84 mol. % of the total number of moles of recurring units which are present in the copolymer.

According to preferred embodiments, the polymer **F** is a copolymer comprising at least 75 mol. %, and preferentially from 80 to 95 mol. %, and more preferentially from 84 to 92 mol. % of recurring units derived from VDF and, up to 25 mol. %, and preferentially from 5 to 20 mol. %, and more preferentially from 8 to 16 mol. % of recurring units derived from at least one other suitable fluorinated monomer, e.g. hexafluoropropylene, chlorotrifluoroethylene, trifluoroethylene, and the like. These mol. % are given with respect to the total number of moles of recurring units which are present in the copolymer.

Copolymers of VDF and HFP are preferred, and advantageously those with the above-mentioned mol. %, in particular those which do not include any monomer other than vinylidene fluoride (VDF) and hexafluoropropylene (HFP). Copolymers of HFP and VDF presents increased flexibility over PVDF homopolymer grades. Good results were obtained using the VDF-HFP copolymer Solef® 21510 provided by SOLVAY, as the polymer **F.**

The glass transition temperature (Tg) of the polymer **F** is, generally, of at most 50°C, preferably of at most 20°C, more preferably of at most 0°C and even preferably of at most -5°C. Besides, the glass transition temperature of the polymer **F** is, generally, of at least -60°C, preferably of at least -50°C. Glass transition can be measured by differential scanning calorimetry (DSC) well known by the skilled person.

The polymer **F** is, advantageously, semi-crystalline. The term semi-crystalline is intended to denote a polymer (A) which possesses a detectable melting point. It is generally understood that a semi-crystalline polymer **F** possesses a heat of fusion determined according to ASTM D 3418 of, advantageously, at least 0.4 J/g, preferably of at least 0.5 J/g, more preferably of at least 1 J/g. Semi-crystalline polymers **F** have significant advantages over amorphous products, as they exhibit the required mechanical properties without additional crosslinking treatments. In particular, the polymer **F** has, advantageously, a heat of fusion of 10 to 60 J/g.

**Compositions and method of preparation**

The compositions of the invention can be provided in the form of a powder or pellets, or directly in the form of a film or sheet, or of a tubular-constructed product, depending of their final use.

The mixture of the VDF (co)polymer and the aromatic compound X may be obtained according to any suitable method. The aromatic compound X can be introduced directly in the melted VDF (co)polymer, if the VDF (co)polymer can be melted at a temperature which is higher than the melting point of the aromatic compound X. Alternatively, the aromatic compound X may be introduced in a solution of the VDF (co)polymer in a solvent chosen for being both a good solvent of the VDF (co)polymer and a good solvent of the aromatic compound X. After, the solvent is eliminated, for example by simple evaporation. Examples of suitable solvents are given in the following part "Film and its method of manufacture".

The mixing of the components is generally carried out under agitation, for obtaining a good repartition. For this mixing, a heating can be used. The temperature of heating will depend on the VDF (co)polymer and if a solvent is used. The conditions of mixing will be adapted by the man skilled in the art, considering the nature of the VDF (co)polymer and the aromatic compound X and their quantity and in which form the composition is desired.

Generally, the composition comprises at least 49.5 wt. % of the vinylidene fluoride (co)polymer, based on the total weight of the composition and/or a wt. % of the aromatic compound X higher than 0 wt. % and equal or lower than 0.5 wt. %, preferably from 0.01 wt. % to 0.4 wt. %, and more preferentially from 0.12 wt. % to 0.25 wt. % of the aromatic compound X, based on the total weight of the composition. Advantageously, the composition comprises at least 99.5 wt. % of the vinylidene fluoride (co)polymer and preferably from 99.60 wt. % to 99.99 wt. %, and more preferentially from 99.75 wt. % to 99.88 wt. % of the vinylidene fluoride (co)polymer based on the total weight of the composition, especially, when the composition does not comprise other compound than the aromatic compound X and the vinylidene fluoride (co)polymer.

Preferably, the composition comprises at least 99.5 wt. %, preferably from 99.60 wt. % to 99.99 wt. %, and more preferentially from 99.75 wt. % to 99.88 wt. % of the vinylidene fluoride (co)polymer, based on the total weight of the composition and/or a wt. % of the aromatic compound X higher than 0 wt. % and equal or lower than 0.5 wt. %, preferably from 0.01 wt. % to 0.4 wt. %, and more preferentially from 0.12 wt. % to 0.25 wt. % of the aromatic compound X, based on the total weight of the composition.

Of course, the aromatic compound X and the VDF (co)polymer specifically described or preferred in the previous disclosure are preferentially used.

In particular, according to preferred embodiments, the compositions of the invention comprise anthracene or pyrene as the aromatic compound X and/or a copolymer of VDF and HFP, in particular a copolymer of VDF and HFP which does not include any monomer other than VDF and HFP, as the VDF (co)polymer.

According to preferred embodiments, these compositions comprise anthracene as the aromatic compound X, in a quantity from 0.01 wt. % to 0.3 wt. %, preferably from 0.02 wt. % to 0.2 wt. % of anthracene, based on the total weight of the composition.

According to other preferred embodiments, these compositions comprise pyrene as the aromatic compound X, in a quantity from 0.01 wt. % to 0.5 wt. %, preferably from 0.02 wt. % to 0.3 wt. % of pyrene, based on the total weight of the composition.

The compositions according to the invention may also comprise an additive, in particular chosen among organic filler particles and inorganic filler particles. When an additive is present, it preferably represents less than 50 wt. % of the total weight of the composition of the invention.

For instance, suitable filler particles that can be used as an additive may be chosen among the group consisting of metal particles, intrinsically conducting polymer particles, semi-conductive material particles, metal oxide particles and magnetic material particles.

Filler particles can be selected among the group consisting of metal conducting metal filler particles, like copper, silver, gold, and zinc. Preferably, the conducting metal filler is silver or copper and more preferably is silver.

Other suitable conductive filler particles may be selected from the list of conductive polymer particles. Conductive polymer particles are essentially composed or even composed of intrinsically conducting polymers (ICPs). They are organic polymers composed of macromolecules having fully conjugated sequences of double bonds along the chains. Such compounds may have metallic conductivity or can be semiconductors. Examples of intrinsically conducting polymers are polyacetylene, polythiophene, polypyrrole, or polyaniline. Among ICPs, polythiophene and polyaniline are preferably used. Poly(3,4-ethylenedioxythiophene) or PEDOT and, in particular PEDOT-PSS, a polymer blend of poly(3,4-ethylenedioxythiophene) and poly(styrene sulfonate) are used more preferably.

Semi-conductive fillers are essentially composed of, or composed of, a semi-conductive material. The semi-conductive core comprises generally at least 95 wt. % of a semi-conductive material, preferably at least 97 wt. % and more preferably at least 99 wt. %.

Generally, the semi-conductive material is selected from the list consisting of Silicon (Si), Silicon-germanium (SiGe), Gallium arsenide (GaAs), Indium phosphide (InP), Gallium nitride (GaN), Silicon carbide (SiC), Zinc sulfide (ZnS), Zinc selenide (ZnSe), Cadmium selenide CdSe, and C admium sulfide (CdS), Titanium disulfide (TiS2), Barium titanate (BaTiO$_3$), strontium titanate (SrTiO$_3$), barium lead titanate (Ba$_x$Pb$_{1-x}$TiO$_3$), barium strontium titanate (Ba$_x$Sr$_{1-x}$TiO$_3$, barium neodymium titanate Ba$_{6-3x}$Nd$_{8+2x}$Ti$_{18}$O$_{54}$ , aluminum trioxide (Al$_2$O$_3$), Calcium titanate (CaTiO3), Strontium zirconium titanate (SrZr$_y$Ti$_{1-y}$O$_3$), Barium strontium zirconium titanate (Ba$_{1-x}$Sr$_x$Zr$_y$Ti$_{1-y}$O$_3$), barium calcium titanate (Ba$_x$Ca$_{1-x}$TiO$_3$), calcium zirconium titanate (CaZr$_y$Ti$_{1-y}$O$_3$), barium calcum zirconium titanate (Ba$_{1-x}$Sr$_x$Zr$_y$Ti$_{1-y}$O$_3$) and mixtures thereof.

Another group of suitable filler particles are metal oxide particles typically containing a metal and an anion of oxygen in the oxidation state of -2, such as zinc oxide (ZnO), tin oxide (SnO), silicon dioxide (SiCO$_2$).

Another group of suitable filler particles are magnetic or ferromagnetic particles typically containing a magnetic or ferromagnetic metal or metal oxide or alloy thereof, such as magnetite (Fe$_3$O$_4$), Cobalt (Co), Iron (Fe), Gadolinium (Gd), Dysporsium (Dy), Iron nickel alloy or permalloy (Fe$_x$Ni$_{1-x}$), Awaruite (Ni$_3$Fe).

Another group of semiconductive or conductive filler particles trhat can be used are carbonaceous filler particles. The term "carbonaceous filler" denotes fillers comprising more than at least 50 wt. % of elemental carbon, preferably at last 75 wt. % of elemental carbon, more preferably at least 90 wt. % of elemental carbon. Especially preferred carbonaceous fillers comprise 99 wt. % or more of elemental carbon or consist of elemental carbon. Preferably carbonaceous fillers are selected from carbon nanotubes, carbon nanohorns, graphite, graphene and carbon black. Particularly preferred for economical reasons is black carbon.

Suitable carbonaceous fillers are available from a variety of sources and suppliers and the skilled person will, based on his professional knowledge and the specific application case, select a suitable material for use in the composition of the present invention.

According to other particular embodiments, the compositions according to the invention do not comprise inorganic particles, and in particular do not comprise inorganic nanoparticles, or more generally the compositions according to the invention do not comprise other components than the aromatic compound X and the VDF (co)polymer.


**Film and its method of manufacture**

The present invention also concerns the films obtainable from the composition according to the invention. These films comprise, preferably consist of, the composition according to the invention.

For the purpose of the present invention, the term "film" designates a flat piece of material having a thickness smaller than either its length or its width.

The thickness of the film is chosen considering the required properties linked to its use, in particular its dielectric properties. Generally, the film according to the present invention has a thickness of 1 to 2000 $\mu$m (micrometer), preferably of 10 to 1500 $\mu$m, and more preferably of 20 to 50 $\mu$m. The thickness may be measured using a digital micrometer onto the film. The value can be the average value of at least ten different measurements made along the film and distanced of at least 1 cm.

The film may be manufactured by a method commonly used in the art, to which the invention belongs, except for using the composition of the invention. In preferred embodiments, the film may be manufactured by casting or melt molding a composition of the invention, for instance by using a hot press at a temperature which will be chosen in function of the melting point of the VDF (co)polymer. However, the method of manufacturing the film is not limited thereto.

According to another aspect, the invention relates to a method for the manufacture of a film, with the composition of the invention. As is known in the art, such a method may comprise the following steps:

i) providing a substrate,
(ii) providing a composition according to the invention, in a liquid form **CL,**
(iii) applying the composition in a liquid form **CL** provided in step (ii) onto at least one surface of the substrate provided in step (i), thereby providing a coating composition layer, and
(iv) drying the coating composition layer provided in step (iii) thereby providing the film.

The method for the manufacture of the film may also comprise, after step (iv), a step (v) of annealing the film provided in step (iv) through the use of a thermal treatment.

For the purpose of the present invention, the substrate may be a rigid or flexible substrate. The substrate may be a support that is patterned or non-patterned. A substrate according to the invention may be made of glass, quartz, ceramic, silicon, carbon, graphene, polymer or paper. It may notably be a membrane, a film, a wafer, in particular a composite wafer, a plate, a textile, a rubber sheet, or a semiconductor.

In some embodiments of the method, the film is recovered by dipping the substrate into a water bath after step (iv) or (v), if an annealing step is implemented.

For the purpose of the present invention, the term "composition in a liquid form" - "composition **CL**"- designates a composition in the liquid state at ambient temperature (23 °C) under atmospheric pressure (1013.25 hPa). The composition **CL** typically comprises at least one organic solvent - solvent **S** - in which the aromatic compound X and the VDF (co)polymer are dissolved or dispersed. This composition in a liquid form may undergo a thermoreversible gelation at ambient temperature and under atmospheric pressure, thus becoming an elastic solid. This process is reversible by heating the elastic solid at a temperature higher than 40°C in order to recover a liquid state, before its application on the substrate.

Non-limitative examples of suitable solvent **S** include, notably, those capable of dissolving the polymer **F,** and advantageously also the aromatic compound **X.** The Solvent **S** is, preferably, chosen among the polar aprotic solvents. According to IUPAC a polar aprotic solvent is a solvent with high dielectric constant and a sizable permanent dipole moment that cannot donate suitably labile hydrogen atoms to form strong hydrogen bonds.

Polar aprotic solvents suitable for the method according to the invention are solvents having a dielectric constant measured at 20°C generally over 5. The dielectric constant of the polar aprotic solvent is preferably more than 10, more preferably more than 12 and even more preferably more than 15. The dielectric constant of solvents can be determined using for example BI-870 Dielectric Constant Meter available from Brookhaven Instruments Corporation, following the recommendations of the provider. Suitable polar aprotic solvents are solvents having a dipole moment generally over 0.5 Debye, preferably more than 1.0 Debye, more preferably more than 1.5 Debye and even more preferably more than 2.0 Debye.

It is advantageous to use a solvent having a relatively low boiling point for facilitating the removal of this solvent. Removal at lower temperature of low boiling point solvent is cost effective and may be useful when conducted in the presence of temperature sensitive compounds or materials. Suitable polar aprotic solvents are solvents having a normal boiling point preferably below 200°C, more preferably below 150°C and even more preferably below 100°C. Suitable polar aprotic solvents have a boiling point generally above 40°C and preferably above 50°C. Normal boiling point is measured at atmospheric pressure by any method well known by the skilled person.

Dielectric constant, dipole moment and boiling point of pure solvents can be found in the "Handbook of Organic Solvent Properties" edited by I.M. Smallwood and published by Elsevier in 1996 (ISBN : 978-0-340-64578-9).

The solvent **S** suitable for implementing the method of manufacture according to the invention is generally chosen in the list consisting of ketones such as acetone, methylethylketone, diethylketone, cyclopentanone, cyclohexanone ; ethers such as 2-methyltetrahydrofuran and tetrahydrofuran (THF) ; esters such as ethylacetate and cyclohexyl acetate ; amides such as N,N-dimethylacetamide and dimethylformamide ; nitriles such as acetonitrile ; sulfoxides such as dimethyl sulfoxide ; carbonates such as dimethylcarbonate, diethylcarbonate, dipropoylcarbonate, dibutylcarbonate, ethylmethylcarbonate, ethylene carbonate, propylene carbonate, vinylene carbonate ; and mixtures thereof.

Methylethyl ketone may be preferred, as solvent **S.**

In step (iii) of the method of the invention, the composition **CL** is applied onto at least one surface of the substrate provided in step (i), typically by using a processing technique selected from the group consisting of casting, spray coating, roll coating, doctor blading, slot die coating, gravure coating, ink jet printing, spin coating, screen printing, brush, squeegee, foam applicator, curtain coating and vacuum coating.

In step (iv) of the method of the invention, the coating composition layer provided in step (iii) is dried, typically at a temperature from 10°C to 100°C, preferably at a temperature in the range from 15°C to 40°C and advantageously at room temperature (23°C). Advantageously, this drying may be completed or replaced by a heating treatment at a temperature closed to or higher than the boiling temperature of the solvent **S** but below the melting temperature of the polymer **F.** This heating treatment may be carried out under reduced pressure, typically at a reduced pressure from 10 to $1.10^4$ Pa, preferably at a pressure from 100 to 1000 Pa.

In a subsequent step (v) of the method of the invention, the film provided in step (iv) may be annealed typically at a temperature from 60°C to 120°C, preferably at a temperature in the range from 80 to 100°C, under reduced pressure, typically at a reduced pressure from 10 to $1.10^4$ Pa, preferably at a pressure from 100 to 1000 Pa.

**Uses** - **electrical and electronic devices**

The invention proposes to use an aromatic compound X which is composed of 2, 3, 4 or 5 fused benzene rings unsubstituted or substituted, in particular by one or several substituents chosen among fluorine, chlorine, iodine and bromine atoms and methyl, methoxy, - $CHF_2$, -$CH_2F$, -$CF_3$, -CN, -$NO_2$, -$NH_2$, -$(CH_2)_n$-$CH_3$, -$(CF_2)_n$-$CH_3$, -$(CF_2CH_2)_n$-$CH_3$, and trifluoromethylphenyl groups, n being equal to 1, 2, 3 or 4, in a composition or film comprising a vinylidene fluoride (co)polymer, to reduce the dielectric losses of said composition or film. The decreasing of the dielectric loss of said composition is appreciated by comparison with the same composition which differs by the absence of an aromatic compound X.

Of course, for obtaining the decreasing of the dielectric loss of said composition, all the characteristics of the composition, of the aromatic compound X and of the VDF (co)polymer specifically described or preferred in the previous disclosure are preferentially used.

Also contemplated herein are the uses of the compositions and films of the invention, in an electrical or electronic device.

So, according to still another aspect, the present invention provides an electrical or electronic device including a composition, in particular in the form of a film, according to the invention. Such a device may be:

- a capacitor comprising a film according to the invention ; in particular high voltage capacitors, pulse power capacitors ;
- an actuator comprising a film according to the invention ;
- a sensor comprising a film according to the invention.

The invention is particularly suitable for such devices working in subhertz operating frequencies. For the purpose of the present invention, subhertz operating frequencies relate to the application on the electrical or electronic device of an electric field that is constant with time or changes periodically with time with a frequency less than 1Hz.

In these kinds of devices, the film of the invention may be present as a dielectric layer, in combination with two electrodes. The film according to the invention may be between the two electrodes or the two electrodes may be positioned on the same side of the film, in particular one on a surface located at the top part of the film and the other on a surface located at the bottom part.

The electrodes are made of a material commonly used in the art, in the manufacture of capacitors, actuators or sensors. According to one embodiment of the present invention, the electrode may include a conductive material chosen among the conductive metals, conductive metal oxides, carbon compounds, conductive polymers or the like, and it may preferably include one or more materials selected from the group consisting of gold (Au), silver (Ag), aluminum (Al), platinum (Pt), carbon (C), carbon nanotube, graphene, polypyrrole, polyaniline, polypiperazine, polyacetylene, and 3,4-ethylenedioxythiophene. In this connection, the electrodes may be formed by a method commonly used in the art. According to one embodiment of the present invention, a conductive metal layer or a conductive metal oxide layer may be formed on each side of the film according to the invention or on surfaces located on the same face of the film, at the top and bottom, for instance by a sputtering method.

The examples below serve to illustrate the invention, but have no limiting character.

## Examples

### Raw materials

Anthracene and pyrene were obtained from Sigma-Aldrich and used as received.

The copolymer of vinylidenefluoride (VDF) and hexafluoropropylene (HFP) PVDF-HFP, comprising 15 mol. % of HFP, was commercially available (Solef® 21510, SOLVAY). Its Tg is - 40 °C and its heat of fusion is 20-24 J/g.

The solvent (methylethyl ketone or MEK) was obtained from Sigma-Aldrich and used as received.

### Preparation of the films

The polymer thin films were obtained by "Solvent Casting" using the Doctor Blade method. This process was constituted of three main steps:

- A polymer solution with a weight ratio (wt. %) of 17 wt. % of the PVDF-HFP polymer was prepared by dissolving the polymer, in the form of a powder, in MEK with stirring at 60°C for 2 hours ;
- Then the polymer solution was poured on a glass substrate and a thin film with a thickness of 20 $\mu$m was casted with a doctor blade. The casting speed was about 0.5 cm/s ;
- Finally the cast polymer thin film was let dried for solvent evaporation under ambient air.

An aromatic compound X was added in various amounts directly in the PVDF-HFP solution at the first step of the PVDF-HFP thin film processing. Anthracene or pyrene was added in increasing concentrations: for pyrene, 0.12 wt. % (weight percent) and 0.25 wt. % were tested and for anthracene, 0.06 wt. %, 0.12 wt. % and 0.25 wt. % were tested.

The wt. % are given with respect to the final weight of the obtained film. The same second and third steps are then used for the composite thin film processing. So, the obtained films have the characteristics listed in **Table 1** hereafter:

**Table 1**

| Aromatic compound X | wt. % of aromatic compound X in the film | wt. % of PVDF-HFP in the film |
| --- | --- | --- |
| pyrene | 0.12 | 99.88 |
| pyrene | 0.25 | 99.75 |
| anthracene | 0.06 | 99.94 |
| anthracene | 0.12 | 99.88 |
| anthracene | 0.25 | 99.75 |

**Dielectric spectroscopy**

The dielectric spectroscopy on the different PVDF thin films was used to determine the dielectric permittivity (also referred as dielectric constant) and the dielectric losses of the obtained films.

The dielectric spectroscopy (Modulab XM MTS equipment from Solartron analytical at a voltage of 2 V from from 10 mHz to 1 MHz at room temperature (23°C)) was performed on the obtained thin film sandwiched between gold electrodes of 20 mm in diameter deposited by a sputtering method, on both sides of the studied thin film.

**Electrical Breakdown measurements**

The breakdown strength was measured by applying an electric voltage of increasing amplitude on the film until the current intensity exhibited a sharp increase to values higher than 10 mA. The film was sandwiched between two stainless steel electrodes of diameter 6mm with round edges or radius 2mm. The voltage increase rate was set to 500 V/s in all the study. At least 15 measurements were performed for each composition and the breakdown field population were studied using Weibull statistics.

The cumulative distribution function Fw as a function of the electric field E of a two parameters Weibull distribution writes:

$$F_W(E) = 1 - \exp(-(\frac{E}{\alpha})^{\beta}),$$

where $\beta$ represents the "shape parameter" which describes the homogeneity of the breakdown strength in the film, and $\alpha$ the "scale parameter" which corresponds to the field at which 63.2% of the population of samples in the film have broken. The value of $\alpha$ is therefore considered as the breakdown strength of a given film as it is well known to those skilled in the art.

Results

The dielectric spectrum of the obtained thin films at room temperature shows that the dielectric losses in the low frequencies regimen (in particular below 1 Hz which corresponds to the regimen of interest in electroactive sensors, for instance) decrease as a function of the frequency. This indicates that in this domain, dielectric losses are driven by electric charge carrier conduction mechanisms adopting an Ohmic behaviour.

Additionally, at 10 mHz (= 0.01 Hz), the dielectric losses of the films obtained with the compositions of the invention, including anthracene or pyrene, greatly drop compared to the value for the films obtained without aromatic compound X, while conserving the dielectric constant value unchanged. The dielectric constant and loss values at 0.01 Hz are represented as a function of the aromatic compound X concentration on the **Figures 1** and **2.**

The test on breakdown strength shows that the addition of anthracene or pyrene has no impact. **Figure 3** shows the breakdown field at which 63.2% of the population of samples in the film have broken, as a function of the aromatic compound X concentration.

In conclusion, by introducing anthracene or pyrene, the dielectric losses are reduced. So, the obtained compositions according to the invention induce less self-heating and less energy dissipation. Moreover, it has been shown that addition of anthracene or pyrene has no impact on the dielectric permittivity and the breakdown strength of the thin films of the invention.

**Claims**

1. A composition comprising:

   - a vinylidene fluoride (co)polymer and
   - an aromatic compound X composed of 2, 3, 4 or 5 benzene rings, which is unsubstituted or substituted, in particular, by one or several substituents chosen among fluorine, chlorine, iodine and bromine atoms and and methyl, methoxy, $-CHF_2$, $-CH_2F$, $-CF_3$, $-CN$, $-NO_2$, $-NH_2$, $-(CH_2)_n-CH_3$, $-(CF_2)_n-CH_3$, $-(CF_2CH_2)_n-CH_3$, and tri-fluoromethylphenyl groups, n being equal to 1, 2, 3 or 4.

2. The composition according to claim 1, wherein the vinylidene fluoride (co)polymer is a copolymer of vinylidene fluoride and at least one other fluoromonomer.

3. The composition according to claim 1 or 2, wherein the vinylidene fluoride (co)polymer is a copolymer of vinylidene fluoride and hexafluoropropylene.

4. The composition according to claim 3, wherein the copolymer is free of any other monomeric repeat unit.

5. The composition according to any one of the preceding claims, which comprises a wt. % of vinylidene fluoride (co)polymer equal or higher than 49.5 wt. %, preferably equal or higher than 99.5 wt. %, more preferably from 99.60 wt. % to 99.99 wt. %, and more preferentially from 99.75 wt. % to 99.88 wt. %, based on the total weight of the composition.

6. The composition according to any one of the preceding claims, which comprises a wt. % of aromatic compound X equal or lower than 0.5 wt. %, preferably from 0.01 wt. % to 0.40 wt. %, and more preferentially from 0.12 wt. % to 0.25 wt. %, based on the total weight of the composition.

7. The composition according to any one of the preceding claims, wherein the aromatic compound X is composed of 2, 3, 4 or 5, optionally partially fluorinated or perfluorinated, fused benzene rings.

8. The composition according to claim 7, wherein the aromatic compound X is chosen in the group consisting of: pyrene, anthracene, naphthalene, phenanthrene, chrysene, picene, perfluoronaphtalene, perfluoroanthracene, perfluorophenanthrene, 1-fluoronaphtalene and octafluoronaphtalene.

9. The composition according to claim 8, wherein the aromatic compound X is anthracene.

10. The composition according to claim 9, which comprises from 0.01 wt. % to 0.3 wt. %, preferably from 0.02 wt. % to 0.2 wt. % of anthracene, based on the total weight of the composition.

11. The composition according to claim 8, wherein the aromatic compound X is pyrene.

12. The composition according to claim 11, which comprises from 0.01 wt. % to 0.5 wt. %, preferably from 0.02 wt. % to 0.3 wt. % of pyrene, based on the total weight of the composition.

13. The composition according to any one of the preceding claims, which is free of any component other than the vinylidene fluoride (co)polymer and the aromatic compound X.

14. A film composed of the composition according to any one of the preceding claims or a film including the composition according to any one of the preceding claims.

15. A method for the manufacture of the film according to claim 14, said method comprising the following steps:

   i) providing a substrate,
   (ii) providing a composition according to any one of claims 1 to 13, in a liquid form **CL,**

(iii) applying the composition in a liquid form **CL** provided in step (ii) onto at least one surface of the substrate provided in step (i), thereby providing a coating composition layer, and
(iv) drying the coating composition layer provided in step (iii) thereby providing the film.

16. An electrical or electronic device comprising the film according to claim 14.

17. The electrical or electronic device according to claim 16, which is selected from the group consisting of capacitors, such as high voltage capacitors and pulse power capacitors, sensors and actuators.

18. A substrate coated with an insulating coating consisting of the film of claim 14.

19. Use of an aromatic compound X composed of 2, 3, 4 or 5 benzene rings, which is unsubstituted or substituted in particular by one or several substituents chosen among fluorine, chlorine, iodine and bromine atoms and and methyl, methoxy, -CHF$_2$, -CH$_2$F, -CF$_3$, -CN, -NO$_2$, -NH$_2$, -(CH$_2$)$_n$-CH$_3$, -(CF$_2$)$_n$-CH$_3$, -(CF$_2$CH$_2$)$_n$-CH$_3$, and trifluoromethyl-phenyl groups, n being equal to 1, 2, 3 or 4, in a composition or film comprising a vinylidene fluoride (co)polymer, to reduce the dielectric losses of said composition or film.

**Figure 1**

**Figure 2**

**Figure 3**

Europäisches
Patentamt

European
Patent Office

Office européen
des brevets

# EUROPEAN SEARCH REPORT

Application Number

EP 19 19 6308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/083780 A1 (PENN STATE RES FOUND [US]) 24 October 2002 (2002-10-24) <br> * page 3, lines 4-8, 25-27 * <br> * page 4, lines 1-6 * <br> * page 7, lines 11-15 * <br> * page 13, lines 27-31 * <br> * figures 6a, 6b * | 1-19 | INV. <br> C08K5/01 |
| X <br> A | EP 0 187 893 A2 (DU PONT [US]) 23 July 1986 (1986-07-23) <br> * examples * <br> * claims * | 1-13 <br> 14-19 | |
| X | WO 2013/085467 A1 (UNIV NANYANG TECH [SG]) 13 June 2013 (2013-06-13) <br> * claims 8, 23, 31 * <br> * examples * | 1-19 | |
| X | US H 1252 H (WADE JR WILLIAM L [US] ET AL) 2 November 1993 (1993-11-02) <br> * column 1, lines 55-62 * <br> * examples * <br> * claim 2 * | 1-19 | TECHNICAL FIELDS SEARCHED (IPC) <br><br> C08K |

The present search report has been drawn up for all claims

| Place of search | Date of completion of the search | Examiner |
|---|---|---|
| Munich | 10 March 2020 | Behm, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 6308

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2020

| Patent document cited in search report | | | Publication date | Patent family member(s) | | | Publication date |
|---|---|---|---|---|---|---|---|
| WO 02083780 | A1 | | 24-10-2002 | NONE | | | |
| EP 0187893 | A2 | | 23-07-1986 | CA | 1262986 | A | 14-11-1989 |
| | | | | DE | 3578893 | D1 | 30-08-1990 |
| | | | | EP | 0187893 | A2 | 23-07-1986 |
| | | | | JP | H0250140 | B2 | 01-11-1990 |
| | | | | JP | S61138655 | A | 26-06-1986 |
| | | | | US | 4529759 | A | 16-07-1985 |
| WO 2013085467 | A1 | | 13-06-2013 | CN | 104053689 | A | 17-09-2014 |
| | | | | JP | 6009579 | B2 | 19-10-2016 |
| | | | | JP | 2015500907 | A | 08-01-2015 |
| | | | | SG | 10201604526U | A | 28-07-2016 |
| | | | | SG | 11201402276T | A | 27-06-2014 |
| | | | | US | 2014367036 | A1 | 18-12-2014 |
| | | | | WO | 2013085467 | A1 | 13-06-2013 |
| US H1252 | H | | 02-11-1993 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019073012 A
- WO 2008129041 A
- WO 2009147030 A

**Non-patent literature cited in the description**

- **J. M. CARR. et al.** Polym. Phys. *J. Polym. Sci.,* 2013, vol. 51, 882-896
- **MENG et al.** *J Appl Polym Sci,* 2010, vol. 116 (5), 2674-2684
- **A.BRUNA DA SILVA et al.** *Polymer,* 2014, vol. 55, 226-234
- Computed electronic structure of polynuclear aromatic hydrocarbon agglomerates. *Proceedings of the Combustion Institute,* 2017, vol. 36.1, 957-964
- Handbook of Organic Solvent Properties. Elsevier, 1996